# EUROPEAN PATENT SPECIFICATION

(11) **EP 4 279 349 B1**
(45) Date of publication and mention of the grant of the patent: **18.03.2026**
(21) Application number: 22174231.5
(22) Date of filing: 19.05.2022
(51) Int. Cl.: B60T 17/08

(54) **BRAKE RELEASE MECHANISM FOR A SPRING BRAKE ACTUATOR AND CORRESPONDING SPRING BRAKE ACTUATOR**
BREMSAUSLÖSUNGSMECHANISMUS FÜR EINEN FEDERBREMSAKTUATOR UND ZUGEHÖRIGER FEDERBREMSAKTUATOR
MÉCANISME DE DESSERRAGE DE FREIN POUR ACTUATEUR DE FREIN À RESSORT ET ACTUATEUR DE FREIN À RESSORT CORRESPONDANT

(43) Date of publication of application: 22.11.2023
(73) Proprietor: ZF CV Systems Europe BV, 1170 Brüssel (BE)
(72) Inventor: FRANCZUK, Michal, 49-305 Brzeg (PL)
(74) Representative: Ohlendorf, Henrike

(56) References cited:
- EP-A2- 2 698 297
- DE-U1- 29 518 114
- KR-B1- 101 437 773
- US-A1- 2018 056 488
- US-A1- 2020 398 808
- US-B2- 8 813 614

## Description

The invention relates to a brake release mechanism for a spring brake actuator, in particular a parking or emergency spring brake actuator for use in a commercial vehicle, said release mechanism comprising a brake release bolt having a threaded portion and an operating section for operating the brake release bolt when inserted into a spring brake actuator, a running nut engaging the threaded portion, said running nut being adapted to axially travel along the threaded portion in order to move a spring brake actuator piston against a force of an actuator power spring, an interface nut attached to said operating section of the brake release bolt, wherein the interface nut and the operating section each comprise at least one bore section that form a common bore when the interface nut is attached to said operating section, and a locking element that is inserted in said bore for blocking the interface nut relative to the operating section.

Brake release mechanisms for spring brake actuators are generally known in the prior art (see for example US 2020/398808 A1). It is the aim of such release mechanisms to release a spring brake actuator, for example in case of pneumatic systems malfunctions. In known brake release mechanisms, the actuator is released by rotating a brake release bolt. Such brake release bolts comprise a threaded portion on which a running nut is engaged. The running nut is allowed to only move axially within a release bolt housing. Thus, rotating the release bolt leads to an axial movement of the running nut. The axial movement of the running nut is then utilized to move a spring brake actuator piston against a force of the actuator power spring to finally release the spring brake actuator and the wheel brake as such.

For operating said brake release bolt, it is known to attach an interface nut to the operating section of the brake release bolt. These interface nuts and operating sections each comprise a bore section that form a common bore when the interface nut is attached to the operating section in the correct position. After having aligned the interface nut to the operating section, a locking element in the form of a locking pin is thereafter inserted in said bore. Therewith, the interface nut is blocked regarding this position relative to the operating section.

Although these systems are well-proven, there is still room for improvement. In an attempt to reduce the overall dimensions of the spring brake actuator, also the interface nut dimensions have been reduced. This, in consequence, also requires the use of smaller locking pins. These locking pins are however subject to high sheer forces when operating the brake release bolt and it has been found that when reducing the dimensions of interface nut and the locking pin, in extreme situations, the locking pin may be destroyed during operation.

Therefore, it was an object of the invention to provide a brake release mechanism for a spring brake actuator that overcomes the above-mentioned issues as far as possible. In particular, it was an object of the invention to provide a brake release mechanism that is more durable in particular with regard to the connection of the interface nut to the operating section. According to the invention, it is proposed that the locking element is configured as a locking ball (claim 1).

With the help of said locking ball, it is ensured that the locking element withstands high sheer forces between interface nut and operating section. Furthermore, the use of locking balls is very cost-effective, since these components are available at low prices. Moreover, compared to a locking pin, inserting said locking ball into the bore can be conducted more conveniently due to the curved shape of the locking ball.

Preferably, the locking ball is configured as a ball bearing ball. Said ball bearing balls are not only widely available but also usually of a high dimensional quality and a high strength.

According to yet another preferred embodiment, the locking ball forms a press-fit connection with the bore. With the help of this, it is ensured that the locking ball stays in place after having been inserted into the bore. Furthermore, said press-fit connection can be conveniently established during a mounting process.

According to yet another preferred embodiment, the locking ball comprises or is made of at least one of the following materials: UNS 52100, stainless steel, in particular 440C, M50. These materials have been found to be suitable for the intended application.

Preferably, the diameter of the locking ball is larger than the diameter of the bore, to form a press-fit connection.

According to yet another preferred embodiment, the locking ball comprises a hardness in the Vickers scale of 740 HV - 900 HV.

Preferably, the bore comprises a diameter of 2,9 mm - 4,9 mm, in particular 3,9 mm. According to yet another preferred embodiment, the bore comprises a depth of 5,5 mm - 6,5 mm, in particular 6 mm. Said dimensions allow for a safe accommodation of the locking ball while the overall dimensions of said bore are as compact as possible.

According to yet another embodiment, the locking ball comprises a diameter of 3 mm to 5 mm, in particular 4 mm. Preferably, the diameter of the locking ball is 0,1 mm larger than the diameter of the bore.

Utilizing a blocking ball with said dimensions ensures that the locking ball provides a durable connection between the interface nut and the operating section, while the locking ball is easy to assemble and allows for a compact brake release mechanism design.

According to a preferred embodiment, the operating section comprises as external thread and the interface nut a corresponding internal thread. With the help of these threads, said interface nut can be screwed onto the operating section. After positioning the interface nut in the final position with regard to the operating section, the relative position of those components is blocked by said locking ball.

Preferably, the bore extends along an axial direction of the brake release bolt between the operating section and interface nut. In other words, both the operating section and the interface nut form a part of the bore such that, when the locking ball is inserted into the bore, the relative position between the operating section and the interface nut is blocked.

According to a preferred embodiment, the bore is configured as a blind bore. This ensures that the locking ball is kept safely inside of said bore and said design makes the assembly process more convenient.

In a further aspect, the invention relates to a spring brake actuator, in particular a parking or emergency spring brake actuator for use in a commercial vehicle, said actuator comprising an actuator housing having an actuator housing base, a spring brake actuator piston located in said actuator housing for applying a braking force, an actuator a power spring located between the actuator housing base and the spring brake actuator piston, said actuator power spring being effective to push the spring brake actuator piston away from the base, wherein said spring brake actuator comprises a brake release mechanism according to the above-mentioned embodiments.

The spring brake actuator takes advantage of the same benefits and preferred embodiments as the brake release mechanism according to the invention. In this regard, reference is made to the above explanations and their content is included herein.

In yet another aspect, the invention relates to a method for assembling a brake release mechanism according to the above embodiments. According to the invention, the method comprises the steps: assembling the interface nut to the brake release bolt, and press-fitting the locking ball into the bore for blocking the interface nut relative to the operating section.

The method for assembling the brake release mechanism takes advantage of the same benefits and preferred embodiments as the brake release mechanism and the spring brake actuator according to the invention. In this regard, reference is made to the above explanations and their content is included herein.

The aspects of the disclosure may best be understood from the following detailed description taken in conjunction with the accompanying figures. The figures are schematic and simplified for clarity, and they just show details to improve the understanding of the claims while other details are left out. Throughout, the same reference numerals are used for identical or corresponding parts. The individual features of each aspect may each be combined with any or all features of other aspects.

These and other aspects, features and/or technical effects will be apparent from and elucidated with reference to the illustrations described hereafter, which show in:
- Figs. 1, 2:: a preferred embodiment of a spring brake actuator according to the concept of the invention in sectional views;
- Fig. 3:: a brake release mechanism for a spring brake actuator according to the preferred embodiment in a sectional view.

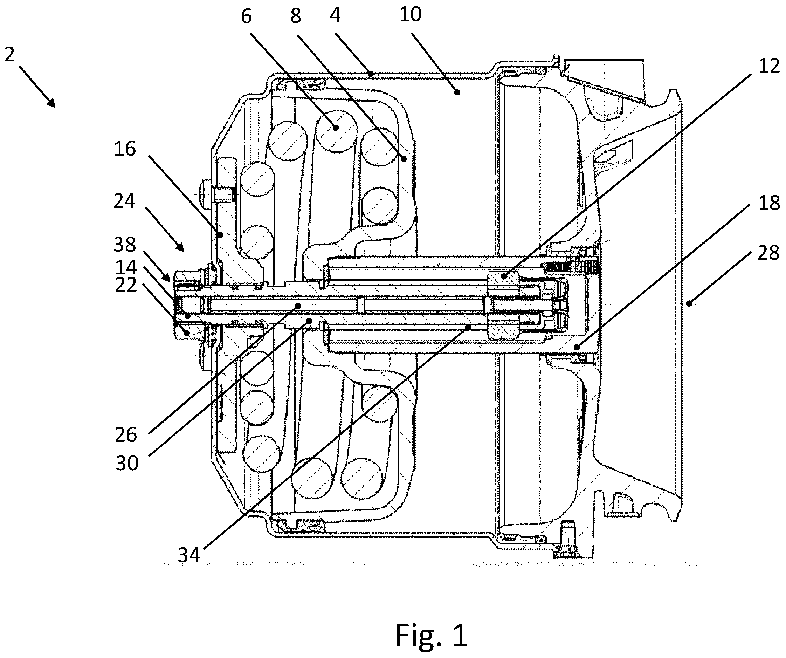

Fig. 1 shows a spring brake actuator 2 having an actuator housing 4. Inside the actuator housing 4, an actuator power spring 6 and a pressure chamber 10 are located. The power spring 6, which rests on the left side in Fig. 1 against an actuator housing base 16 and on the opposite side on a spring brake actuator piston 8, is in Fig. 1 held in the release position by positive pressure inside the pressure chamber 10. The spring brake actuator piston 8 is adapted to transmit the inflicted force to a rod 18 which in turn transmits the applied power to the wheel brakes (not shown).

Furthermore, the spring brake actuator 2 comprises a brake release mechanism 24. The brake release mechanism 24 is utilized to release the spring brake actuator 2. The brake release mechanism 24 comprises a rotatable brake release bolt 30 which is insertable into the rod 18. The brake release bolt 30 comprises a threaded portion 34 on which a running nut 12 is engaged. A rotatability of the running nut 12 is inhibited inside said rod 18.

When the brake release bolt 30 is rotated, the running nut 12 moves along the threaded portion 34 and thus axially along the brake release bolt 30. The running nut 12 is adapted to move the spring brake actuator piston 8 against a force of the actuator power spring 6. In other words, when the running nut 12 moves towards an actuator housing base 16, it forces the spring brake actuator piston 8 towards the actuator housing base 16, thereby compressing the actuator power spring 6. This, in consequence, releases the spring brake actuator 2.

The brake release bolt 30 comprises an operating section 14. To the operating section 14 an interface nut 22 is attached. The interface nut 22 and the operating section 14 share and form a common bore 38. The common bore 38 is formed when the interface nut 22 is attached to the operating section 14 in a final assembled position. An indicator pin 26 is moveable within an axial direction 28. The indicator pin 26 indicates whether the brake release mechanism 24 releases the spring brake actuator piston 8.

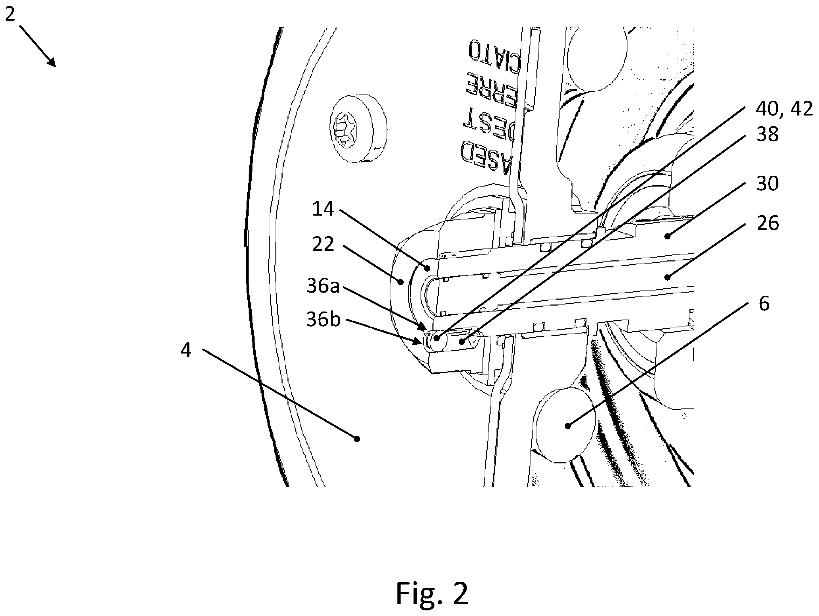

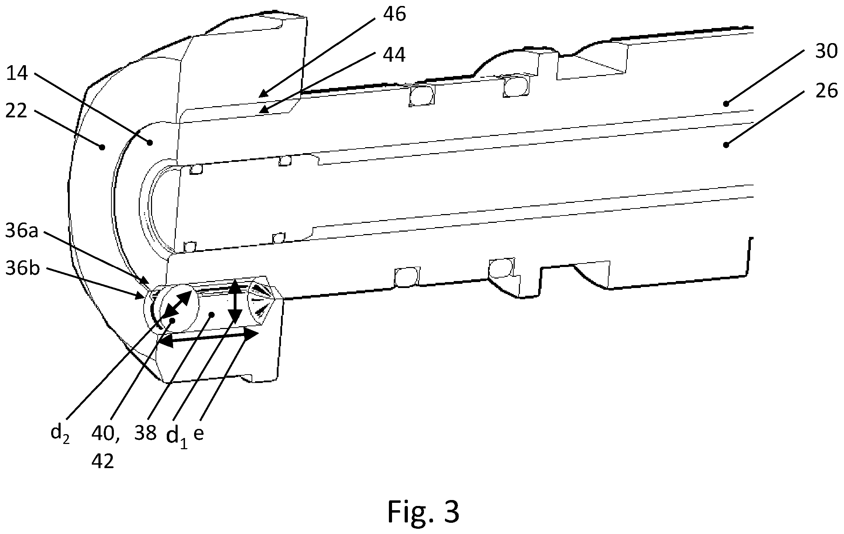

The interface nut 22 and the operating section 14 are detailed in figures 2 and 3. It can be obtained from these figures that the interface nut 22 and the operating section 14 each comprise a bore section 36a, b. These bore sections 36a, 36b form a common bore 38 when the interface nut 22 is attached to the operating section 14 in the final assembly position. A locking element 40 is inserted in said bore 38 for blocking the interface nut 22 relative to the relative to the operating section 14. The locking element 40 is configured as a locking ball 42, in particular as a ball bearing ball.

The locking ball 42 forms a press-fit connection with the bore 38. Furthermore, the bore 38 comprises a diameter d₁. The locking ball 42 comprises a diameter d₂. Furthermore, the bore 38 comprises a depth e.

The operating section 14 comprises an external thread 44. The interface nut 22 comprises a corresponding internal thread 46. In this way, the interface nut 22 is screwed upon the operating section 14. The bore 38 extends along the axial direction 28 of the brake release bolt 30. The bore 38 furthermore extends between the operating section 14 and the interface nut 22. The bore 38 is configured as a blind bore.

### List of references (part of the description)

- 2: spring brake actuator
- 4: actuator housing
- 6: actuator power spring
- 8: spring brake actuator piston
- 10: pressure chamber
- 12: running nut
- 14: operating section
- 16: actuator housing base
- 18: rod
- 22: interface nut
- 24: brake release mechanism
- 26: indicator pin
- 28: axial direction
- 30: brake release bolt
- 34: threaded portion
- 36a,b: bore section
- 38: bore
- 40: locking element
- 42: locking ball
- 44: external thread
- 46: internal thread
- d₁: bore diameter
- d₂: locking ball diameter
- e: bore depth

## Claims

1. A brake release mechanism (24) for a spring brake actuator (2), in particular a parking or emergency spring brake actuator (2) for use in a commercial vehicle, said release mechanism (24) comprising:
- a brake release bolt (30) having a threaded portion (34) and an operating section (14) for operating the brake release bolt (30) when inserted into a spring brake actuator (2),
- a running nut (12) engaging the threaded portion (34), said running nut (12) being adapted to axially travel along the threaded portion (34) in order to move a spring brake actuator piston (8) against a force of an actuator power spring (6),
- an interface nut (22) attached to said operating section (14) of the brake release bolt (30), wherein the interface nut (22) and the operating section (14) each comprise at least one bore section (36a, 36b) that form a common bore (38) when the interface nut (22) is attached to said operating section (14), and
- a locking element (40) that is inserted in said bore (38) for blocking the interface nut (22) relative to the operating section (14),
**characterized in that** the locking element (40) is configured as a locking ball (42).

2. The brake release mechanism (24) according to claim 1,
wherein the locking ball (42) is configured as a ball bearing ball (42).

3. The brake release mechanism (24) according to any of the preceding claims,
wherein the locking ball (42) forms a press-fit connection with the bore (38).

4. The brake release mechanism (24) according to any of the preceding claims,
wherein the locking ball (42) comprises or is made of at least one of the following materials:
- UNS 52100,
- Stainless steel, in particular 440C,
- M50.

5. The brake release mechanism (24) according to any of the preceding claims,
wherein the bore (38) comprises a diameter (d₁) of 2,9 mm - 4,9 mm, in particular 3,9 mm.

6. The brake release mechanism (24) according to any of the preceding claims,
wherein the locking ball (42) comprises a diameter (d₂) of 3 mm - 5 mm, in particular 4 mm.

7. The brake release mechanism (24) according to any of the preceding claims,
wherein the bore (38) comprises a depth (e) of 5,5 mm - 6,5 mm, in particular 6 mm.

8. The brake release mechanism (24) according to any of the preceding claims,
wherein the operating section (14) comprises an external thread (44) and wherein said interface nut (22) comprises a corresponding internal thread (46).

9. The brake release mechanism (24) according to any of the preceding claims,
wherein the bore (38) extends along an axial direction (28) of the brake release bolt (30) between the operating section (14) and the interface nut (22).

10. The brake release mechanism (24) according to any of the preceding claims,
wherein the bore (38) is configured as a blind bore.

11. A spring brake actuator (2), in particular a parking or emergency spring brake actuator (2) for use in a commercial vehicle, said actuator (2) comprising:
- an actuator housing (4) having an actuator housing base,
- a spring brake actuator piston (8) located in said actuator housing (4) for applying a braking force,
- an actuator power spring (6) located between the actuator housing base (5) and the spring brake actuator piston (8), said actuator power spring (6) being effective to push the spring brake actuator piston (8) away from the base (5), **characterized by** a brake release mechanism (24) according to any of claims 1-10.

12. Method for assembling a brake release mechanism (24) according to claims 1 - 10, comprising the steps:
- assembling the interface nut (22) to the brake release bolt (30);
- press-fitting the locking ball (42) into the bore (38) for blocking the interface nut (22) relative to the operating section (14).

## Patentansprüche

1. Bremslösemechanismus (24) für einen Federspeicherbremszylinder (2), insbesondere einen Park- oder Not-Federspeicherbremszylinder (2) zur Verwendung in einem Nutzfahrzeug, der Lösemechanismus (24) umfassend:
- einen Bremslösebolzen (30), der einen Gewindeabschnitt (34) und einen Betriebsbereich (14) zum Betreiben des Bremslösebolzens (30) aufweist, wenn er in einen Federspeicherbremszylinder (2) eingesetzt ist,
- eine Laufmutter (12), die den Gewindeabschnitt (34) in Eingriff nimmt, wobei die Laufmutter (12) angepasst ist, um sich entlang des Gewindeabschnitts (34) axial zu bewegen, um einen Federspeicherbremszylinderkolben (8) gegen eine Kraft einer Zylindertriebfeder (6) zu bewegen,
- eine Schnittstellenmutter (22), die an dem Betriebsbereich (14) des Bremslösebolzens (30) befestigt ist, wobei die Schnittstellenmutter (22) und der Betriebsbereich (14) jeweils mindestens einen Bohrungsbereich (36a, 36b) umfassen, die eine gemeinsame Bohrung (38) ausbilden, wenn die Schnittstellenmutter (22) an dem Betriebsbereich (14) befestigt ist, und
- ein Verriegelungselement (40), das in die Bohrung (38) eingesetzt ist, zum Blockieren der Schnittstellenmutter (22) relativ zu dem Betriebsbereich (14),
**dadurch gekennzeichnet, dass** das Verriegelungselement (40) als eine Verriegelungskugel (42) konfiguriert ist.

2. Bremslösemechanismus (24) nach Anspruch 1,
wobei die Verriegelungskugel (42) als eine Kugellagerkugel (42) konfiguriert ist.

3. Bremslösemechanismus (24) nach einem der vorstehenden Ansprüche,
wobei die Verriegelungskugel (42) eine Pressverbindung mit der Bohrung (38) ausbildet.

4. Bremslösemechanismus (24) nach einem der vorstehenden Ansprüche,
wobei die Verriegelungskugel (42) mindestens eines der folgenden Materialien umfasst oder daraus hergestellt ist:
- UNS 52100,
- Edelstahl, insbesondere 440C,
- M50.

5. Bremslösemechanismus (24) nach einem der vorstehenden Ansprüche,
wobei die Bohrung (38) einen Durchmesser (d₁) von 2,9 mm-4,9 mm, insbesondere 3,9 mm, umfasst.

6. Bremslösemechanismus (24) nach einem der vorstehenden Ansprüche,
wobei die Verriegelungskugel (42) einen Durchmesser (d₂) von 3 mm-5 mm, insbesondere 4 mm, umfasst.

7. Bremslösemechanismus (24) nach einem der vorstehenden Ansprüche,
wobei die Bohrung (38) eine Tiefe (e) von 5,5 mm-6,5 mm, insbesondere 6 mm, umfasst.

8. Bremslösemechanismus (24) nach einem der vorstehenden Ansprüche, wobei der Betriebsbereich (14) ein Außengewinde (44) umfasst und wobei die Schnittstellenmutter (22) ein entsprechendes Innengewinde (46) umfasst.

9. Bremslösemechanismus (24) nach einem der vorstehenden Ansprüche,
wobei sich die Bohrung (38) entlang einer axialen Richtung (28) des Bremslösebolzens (30) zwischen dem Betriebsbereich (14) und der Schnittstellenmutter (22) erstreckt.

10. Bremslösemechanismus (24) nach einem der vorstehenden Ansprüche, wobei die Bohrung (38) als eine Grundbohrung konfiguriert ist.

11. Federspeicherbremszylinder (2), insbesondere ein Park- oder Not-Federspeicherbremszylinder (2) zur Verwendung in einem Nutzfahrzeug, der Zylinder (2) umfassend:
- ein Zylindergehäuse (4), das eine Zylindergehäusebasis aufweist,
- einen in dem Zylindergehäuse (4) befindlichen Federspeicherbremszylinderkolben (8) zum Ausüben einer Bremskraft,
- eine Zylindertriebfeder (6), die sich zwischen der Zylindergehäusebasis (5) und dem Federspeicherbremszylinderkolben (8) befindet, wobei die Zylindertriebfeder (6) wirksam ist, um den Federspeicherbremszylinderkolben (8) von der Basis (5) weg zu drücken,
**gekennzeichnet durch** einen Bremslösemechanismus (24) nach einem der Ansprüche 1 bis 10.

12. Verfahren zum Zusammenbauen eines Bremslösemechanismus (24) nach den Ansprüchen 1 bis 10, umfassend die Schritte:
- Zusammenbauen der Schnittstellenmutter (22) mit dem Bremslösebolzen (30);
- Einpressen der Verriegelungskugel (42) in die Bohrung (38) zum Blockieren der Schnittstellenmutter (22) relativ zu dem Betriebsbereich (14).

## Revendications

1. Mécanisme de libération de frein (24) pour un actionneur de frein à ressort (2), en particulier un actionneur de frein à ressort de stationnement ou d'urgence (2) pour une utilisation dans un véhicule utilitaire, ledit mécanisme de libération (24) comprenant :
- un boulon de desserrage de frein (30) ayant une partie filetée (34) et une section d'actionnement (14) pour actionner le boulon de desserrage de frein (30) lorsqu'il est inséré dans un actionneur de frein à ressort (2),
- un écrou de roulement (12) venant en prise avec la partie filetée (34), ledit écrou de roulement (12) étant adapté à se déplacer axialement le long de la partie filetée (34) afin de déplacer un piston d'actionneur de frein à ressort (8) contre une force d'un ressort de puissance d'actionneur (6),
- un écrou d'interface (22) fixé à ladite section de fonctionnement (14) du boulon de libération de frein (30), dans lequel l'écrou d'interface (22) et la section de fonctionnement (14) comprennent chacun(e) au moins une section d'alésage (36a, 36b) qui forme un alésage commun (38) lorsque l'écrou d'interface (22) est fixé à ladite section de fonctionnement (14), et
- un élément de verrouillage (40) qui est inséré dans ledit alésage (38) pour bloquer l'écrou d'interface (22) par rapport à la section de fonctionnement (14),
**caractérisé en ce que** l'élément de verrouillage (40) est conçu comme une bille de verrouillage (42).

2. Mécanisme de libération de frein (24) selon la revendication 1,
dans lequel la bille de verrouillage (42) est conçue comme une bille de roulement à billes (42).

3. Mécanisme de libération de frein (24) selon l'une quelconque des revendications précédentes,
dans lequel la bille de verrouillage (42) forme une liaison par ajustement par compression avec l'alésage (38).

4. Mécanisme de libération de frein (24) selon l'une quelconque des revendications précédentes,
dans lequel la bille de verrouillage (42) comprend ou est constituée d'au moins l'un des matériaux suivants :
- UNS 52100,
- Acier inoxydable, en particulier 440C,
- M50.

5. Mécanisme de libération de frein (24) selon l'une quelconque des revendications précédentes,
dans laquelle l'alésage (38) comprend un diamètre (d₁) de 2,9 mm à 4,9 mm, en particulier 3,9 mm.

6. Mécanisme de libération de frein (24) selon l'une quelconque des revendications précédentes,
dans lequel la bille de verrouillage (42) comprend un diamètre (d₂) de 3 mm à 5 mm, en particulier de 4 mm.

7. Mécanisme de libération de frein (24) selon l'une quelconque des revendications précédentes,
dans lequel l'alésage (38) comprend une profondeur (e) de 5,5 mm à 6,5 mm, en particulier 6 mm.

8. Mécanisme de libération de frein (24) selon l'une quelconque des revendications précédentes,
dans lequel la section de fonctionnement (14) comprend un filetage externe (44), et
dans lequel ledit écrou d'interface (22) comprend un filetage interne correspondant (46).

9. Mécanisme de libération de frein (24) selon l'une quelconque des revendications précédentes,
dans lequel l'alésage (38) s'étend le long d'une direction axiale (28) du boulon de libération de frein (30) entre la section de fonctionnement (14) et l'écrou d'interface (22).

10. Mécanisme de libération de frein (24) selon l'une quelconque des revendications précédentes,
dans lequel l'alésage (38) est conçu comme un alésage borgne.

11. Actionneur de frein à ressort (2), en particulier un actionneur de frein à ressort de stationnement ou d'urgence (2) pour une utilisation dans un véhicule utilitaire, ledit actionneur (2) comprenant :
- un logement d'actionneur (4) ayant une base de logement d'actionneur,
- un piston de cylindre de frein à ressort (8) situé dans ledit logement d'actionneur (4) pour appliquer une force de freinage,
- un ressort de puissance d'actionneur (6) situé entre la base de logement d'actionneur (5) et le piston d'actionneur de frein à ressort (8), ledit ressort de puissance d'actionneur (6) étant efficace pour pousser le piston d'actionneur de frein à ressort (8) loin de la base (5),
**caractérisé par** un mécanisme de libération de frein (24) selon l'une quelconque des revendications 1 à 10.

12. Procédé permettant d'assembler un mécanisme de libération de frein (24) selon les revendications 1 à 10, comprenant les étapes consistant à :
- assembler l'écrou d'interface (22) au boulon de libération de frein (30) ;
- ajuster par pression la bille de verrouillage (42) dans l'alésage (38) pour bloquer l'écrou d'interface (22) par rapport à la section de fonctionnement (14).
